# EUROPÄISCHE PATENTSCHRIFT

(11) **EP 1 551 090 B1**
(45) Veröffentlichungstag und Bekanntmachung des Hinweises auf die Patenterteilung: **11.11.2009**
(21) Anmeldenummer: 04030869.4
(22) Anmeldetag: 28.12.2004
(51) Int. Cl.: H02K 3/48, H02K 3/40, H02K 15/06

(54) **Maschinenkomponente mit einer elektrischen Wicklung einer elektrischen Maschine**
Component of an electric machine carrying an electric winding
Elément de machine portant un bobinage électrique

(30) Priorität: 29.12.2003 DE 10361731
(43) Veröffentlichungstag der Anmeldung: 06.07.2005
(73) Patentinhaber: Voith Hydro Holding GmbH & Co. KG, 89522 Heidenheim (DE)
(72) Erfinder: Hildinger, Thomas, Sao Paulo - S.P. 04648-072 (BR); Faria, Egidio Josè, Sao Paulo - S.P. 04708-010 (BR); von Musil, Rudolf, 46147 Oberhausen (DE)
(74) Vertreter: Weitzel, Wolfgang

(56) Entgegenhaltungen:
- EP-A- 1 107 428
- DE-A1- 3 636 008
- US-A- 4 314 168
- PATENT ABSTRACTS OF JAPAN Bd. 1998, Nr. 14, 31. Dezember 1998 (1998-12-31) -& JP 10 257707 A (MITSUBISHI ELECTRIC CORP), 25. September 1998 (1998-09-25)
- PATENT ABSTRACTS OF JAPAN Bd. 013, Nr. 548 (E-856), 7. Dezember 1989 (1989-12-07) -& JP 01 227640 A (HITACHI LTD; others: 01), 11. September 1989 (1989-09-11)
- PATENT ABSTRACTS OF JAPAN Bd. 010, Nr. 217 (E-423), 29. Juli 1986 (1986-07-29) -& JP 61 054836 A (HITACHI LTD), 19. März 1986 (1986-03-19)

## Beschreibung

Die vorliegende Erfindung betrifft allgemein die Komponente einer elektrischen Maschine, welche mit einer elektrischen Wicklung versehen ist. Insbesondere bezieht sich die vorliegende Erfindung auf Generatoren von Kraftwerken, zum Beispiel eines Wasserkraftwerks oder eines Dampfturbinen- beziehungsweise Gasturbinenkraftwerks, in welchen die Maschinenkomponente den Stator beziehungsweise Ständer eines Generators ausbildet. In einem weiteren Ausführungsfall bezieht sich die vorliegende Erfindung auf einen elektrischen Motor, mit dem beispielsweise eine Wasserpumpe angetrieben wird, wobei die Maschinenkomponente insbesondere den Stator des Motors ausbildet.

Maschinenkomponenten einer elektrischen Maschine mit einer elektrischen Wicklung sind bekannt. Im nachfolgenden wird insbesondere auf Generatoren mit Hochspannungskabeln Bezug genommen, auf welche sich die vorliegende Erfindung gemäß einer Ausführungsform bezieht. Die internationale Patentanmeldung WO 98/34321 zeigt eine elektrische Maschine mit einem Stator, in welchem eine Vielzahl von Hochspannungsleitungen durch Schlitze, welche in radialer und axialer Richtung im Stator ausgebildet sind, gezogen sind. Die Schlitze weisen in radialer Richtung abwechselnd Ausbuchtungen und Einschnürungen auf, welche dazu dienen, einzelne Kabel ortsfest in den Schlitzen zu halten. Die internationale Patentanmeldung WO 97/45923 zeigt ein Wasserkraftwerk mit einem Generator, dessen Ständer ebenfalls mit entsprechenden Nuten mit abwechselnden Ausbuchtungen und Einschnürungen versehen ist, wobei in den Ausbuchtungen Hochspannungskabel aufgenommen sind.

Schließlich zeigt die internationale Patentanmeldung WO 97/45925 einen Motor eines elektrischen Kraftwerks mit einem Stator, welcher entsprechende Nuten und Hochspannungskabel aufweist.

Bei allen Gegenständen der vorgenannten Anmeldungen müssen die Leiter wie bei konventionellen Ständerwicklungen, das heißt Wicklungen mit Kabeln, die für vergleichsweise kleinere Spannungen ausgelegt sind, in Nuten angeordnet werden. Dort müssen sie derart fixiert sein, dass die Kräfte, die durch die Wechselwirkung des Stromes im Leiter mit dem umgebenden magnetischen Feld entstehen, keine unzulässigen Bewegungen des Leiters hervorrufen können. Um eine solche Fixierung zu erreichen, sind verschiedene Anstrengungen unternommen worden.

WO 97/45932 zeigt die Anordnung von Druckelementen zwischen den Wänden der Ständernuten und den Hochspannungskabeln. Diese Druckelemente können beispielsweise auf einer durch sie hindurchgeführten Stange derart druckbeaufschlagt und verformt werden, dass sie eine Radialkraft auf die Kabel ausüben und diese somit verspannen.

WO 97/45935 zeigt ebenfalls die Anordnung von Druckelementen zwischen den Nutwänden und den Hochspannungskabeln, welche, nachdem die Kabeln in die Nut eingeführt worden sind und die Druckelemente in Hohlräume zwischen zwei Kabeln und den Nutwänden eingebracht wurden, gewissermaßen "aufgepumpt" werden können, um ebenfalls einen radialen Druck auf die Kabel auszuüben und diese somit zu verspannen. Zusätzlich können elastische Elemente zwischen den Kabeln und den Nutwänden beziehungsweise zwischen den Druckelementen und den Kabeln vorgesehen sein, um einen elastischen Druck auf die Kabel auszuüben. In einer besonderen Ausführung sind die Kabel durch die Druckelemente umschlossen und werden durch Druckbeaufschlagung gegeneinander verspannt. Die Druckbeaufschlagung kann beispielsweise durch Einbringen eines Epoxydharzes erreicht werden.

WO 97/45936 zeigt ebenfalls das Aufbringen von radialen Kräften auf die Hochspannungskabel in einer Ständernut durch Druckelemente, welche aufgepumpt werden.

WO 97/45938 zeigt Druckelemente, welche beispielsweise mittels einer Federkraft gegen die Hochspannungskabel in den Statornuten einer elektrischen Maschine gedrückt werden und somit die Hochspannungskabel gegeneinander beziehungsweise gegen die Nutwände verspannen. Auch hierbei wird ein radialer Druck - von außen nach innen - auf die Kabel ausgeübt.

WO 97/45939 zeigt ebenfalls die Anordnung von Hochspannungskabeln in den Statornuten einer elektrischen Maschine. Nach dem Einbringen der Hochspannungskabel teilweise formschlüssig in entsprechende Ausnehmungen in den Nutenwänden wird der verbleibende Hohlraum mit einem elastischen Material ausgeschäumt und somit die Kabel formschlüssig und druckbeaufschlagt in den Nuten ortsfest gehalten.

WO 99/31781 zeigt das Vorsehen von Druckschläuchen zwischen den Kabeln einer Wicklung einer elektrischen Maschine, welche nach dem Einbringen aufgepumpt werden und somit eine radiale Kraft von außen nach innen auf die Kabel ausüben und diese in den Wicklungsnuten verpressen.

Schließlich zeigt WO 00/73865 eine Einrichtung, mit welcher Kabel der Wicklung einer elektrischen Maschine in Nuten eingezogen werden können.

Die Fixierung der Kabel aller oben genannten Anmeldungen beruht auf Vorspannungen, die während des Montageprozesses durch Druckelemente eingebracht werden und die Kabel radial verformen. Daraus haben sich verschiedene Nachteile ergeben: Zunächst weicht der Querschnitt der einzelnen Kabel durch die aufgebrachten Verformungen von der Kreisform ab. Dadurch entsteht in der Isolierung der Kabel eine in Umfangsrichtung ungleichmäßige elektrische Feldstärke. Dies muss durch eine erhöhte Dicke der Isolierung ausgeglichen werden, wodurch die Kosten für den Generator deutlich steigen. Sofern die Dicke der Isolierung nicht erhöht wird, führt die erzielte Ungleichmäßigkeit der elektrischen Feldstärke zu einem vorzeitigen Altern und Versagen der Isolierung.

Als weiterer Nachteil ist anzusehen, dass die Kabel beim Montageprozess durch die Nuten durchgeschleift werden müssen. Dies bedeutet zum einen, einen erhöhten Aufwand bei der Montage der Wicklung, siehe beispielsweise die genannte internationale Anmeldung WO 00/73865, und birgt die Gefahr der Verletzung der Kabeloberfläche. Ferner kann eine formschlüssige Verbindung zwischen Kabel und Nut nicht ausreichend gewährleistet werden.

Schließlich hat man festgestellt, dass die Kabel, auch wenn sie nach ihrer Montage zunächst weitgehend ortsfest fixiert in den Ständernuten waren, Lockerungen unterlagen, welche zu einer unzulässigen Bewegung der Kabel in den Ständernuten führten. Die Ursache für solche erst im Verlauf der Zeit auftretende Lockerungen war bisher unbekannt.

Das Dokument US 2002/0047458 zeigt den Stator eines Hochspannungsgenerators, welcher eine Vielzahl von in radialer Richtung verlaufenden keilförmige oder planparallele Nuten aufweist, in welche in radialer Richtung übereinander eine Vielzahl von Kabeln eingefügt sind. Die Kabel werden dabei durch im Stator in radialer Richtung unbeweglich verankerte Trennstücke fixiert, wobei zwei oder mehr Trennstücke jeweils ein Kabel zwischen sich einschließen. Radialkräfte, welche auf die Kabel wirken, werden somit stets über das unmittelbar benachbart anliegende Trennstück direkt in den Stator eingeleitet. Aufgrund dessen, dass jedes Trennstück durch eine Verzahnung in radialer Richtung mit dem Stator, welche durch die stufenförmigen Innenwände der Nuten ausgebildet wird, in radialer Richtung fixiert ist, kann es insbesondere durch eine unterschiedliche thermische Ausdehnung der Trennstücke und des Vollmaterials des Stators zu einer Lockerung der Trennstücke im Stator und damit zu einer Lockerung der Kabel kommen.

JP 10-257 707 A welches als nachstliegender Stand der Technick angesehen wird, offenbart :
Maschinenkomponente einer elektrischen Maschine umfassend einen Stator mit einem Ständerblechpaket mit Ständerzähnen, mit einer Vielzahl von zwischen den Ständerzähnen radial und achsparallel verlaufenden Nuten, in welchen eine elektrische Wirklung mit einer Vielzahl von in axialer Richtung des Stators verlaufenden zeiten angeordnet ist, wobei die Nuten einen Nutgrund und zwei gegenüberstehend angeordnete Nutwände aufweisen, zwischen welchen eine Vielzahl von Füllstücken eingebracht ist, weiterhin umfassend folgende Merkmale:
   jeweils mindestens zwei Füllstücke umschließen den Umfang eines zeites vollständig und formschlüssig;
   die Füllstücke stützen sich in radialer Richtung der Maschinenkomponente derart aufeinander und das innerste Füllstück in der Nut derart auf dem Nutgrund oder im Bereich des Nutgrunds ab, dass von außen oder durch die zeiter aufgebrachte Druckkräfte über die Füllstücke auf die Maschinenkomponente abgeleitet werden, wobei die Nutwände, welche die Füllstücke zwischen sich einschließen,
   zumindest im Bereich der Füllstücke in radialer Richtung stetig ausgebildet sind.

JP 10-257 707 A offenbart weiterhin :
Verfahren zur Montage einer Maschinenkomponente einer elektrischen Maschine, umfassend einen Stator mit einem Ständerblechpaket mit Ständerzähnen, mit einer Vielzahl von zwischen den Ständerzähnen radial und achsparallel verlaufenden Nuten, in welchen eine elektrische Wicklung mit einer Vielzahl von in axiale Richtung des Stators verlaufenden zeiter angeordnet wird, wobei die Nuten einen Nutgrund und zwei gegenüberstehend angeordnete Nutwände aufweisen, zwischen welchen eine Vielzahl von Füllstücken eingebracht wird, mit den folgenden weiteren Verfahrensschtitten:
   aus den zeiten und einer Vielzahl von Füllstücken wird eine Nutfüllung außerhalb der Nut zusammengesetzt und insbesondere verklebt,
   die zusammengesetzte Nutfüllung wird in eine Nut eingeführt, deren Nutwände, welche die Füllstücke zwischen sich einschließen, zumindest im Bereich der Füllstücke in radialer Richtung der Maschinenkomponente stetig ausgebildet sind, und in der Nut befestigt, insbesondere verkeilt, so dass die wechselseitige Abstützung der Füllstücke in radialer Richtung der Maschinenkomponente erfolgt und sich das innerste Füllstück in der Nut auf dem Nutgrund oder im Bereich des Nutgrunds abstützt, wobei von außen oder durch die zeiter aufgebrachte Druckkräfte über die Füllstücke auf die Maschinenkomponente abgeleitet werden.

Der Erfindung liegt die Aufgabe zugrunde, eine Maschinenkomponente einer elektrischen Maschine, insbesondere einen Stator, mit einer elektrischen Wicklung anzugeben, welche gegenüber dem Stand der Technik verbessert ist und insbesondere die oben genannten Probleme überwindet. Dabei soll insbesondere eine dauerhafte und zuverlässige Fixierung der einzelnen Kabel, insbesondere Hochspannungskabel, der Wicklung in den Nuten der elektrischen Maschine gewährleistet werden und eine einfache und kostengünstige Montage möglich sein.

Die Erfindung wird durch eine Maschinenkomponente gemäß Anspruch 1 gelöst. Die Unteransprüche beschreiben besonders vorteilhafte Ausführungen der Erfindung.

Die Erfinder haben die Ursache dafür erkannt, welche bisher zu einer Lockerung der bei der Montage mit Vorspannung eingebrachten Kabel in den Nuten geführt hat. So konnte zwar durch die anfänglich elastische Verformung der Hochspannungskabel durch die radiale Druckbeaufschlagung zunächst eine ausreichende Fixierung unmittelbar nach der Montage erreicht werden. Die Isolierung der Hochspannungskabel hat jedoch im Laufe der Zeit durch eine plastische Verformung die aufgebrachten Vorspannungen abgebaut, was schließlich zu einer Lockerung der Kabel führte.

Die Erfinder sind daher einen anderen Weg gegangen. So haben sie Füllstücke in den Nuten für die Wicklung der elektrischen Maschine vorgesehen, welche sich radial aufeinander abstützen. Das innerste Füllstück in der Nut, d. h. jenes Füllstück, welches von allen Füllstücken dem Nutgrund am nächsten ist, stützt sich zugleich auf dem Nutgrund oder zumindest im radial inneren Bereich der Nut ab. Dadurch werden von außen aufgebrachte Druckkräfte oder durch die Kabel aufgebrachte Druckkräfte über die aufeinander abgestützten Füllstücke auf die Maschinenkomponente abgeleitet. Durch ein vollständiges formschlüssiges Anliegen der einzelnen Kabel in den Füllstücken werden Verformungen der Kabel vermieden und der Kabelquerschnitt behält im wesentlichen vollständig seine Kreisform.

Die Verspannung erfolgt somit nicht durch die Verformung der Kabel, sondern durch die Verspannung beziehungsweise das Aufeinanderliegen der einzelnen Füllstücke in radialer Richtung. Die Füllstücke liegen dabei insbesondere derart aufeinander, dass in Radialrichtung verlaufende lineare Kraftlinien ausgebildet werden, welche im wesentlich oder vollständig außerhalb der Querschnitte der einzelnen Kabel verlaufen.

Erfindungsgemäß sind dabei die sich gegenüberstehend angeordneten Nutwände, welche zwischen sich mittelbar oder unmittelbar die Füllstücke einschließen, in radialer Richtung stetig ausgeführt. Stetig ist dabei im mathematischen Sinne zu verstehen, d. h. der radiale Verlauf der Nutwände bzw. der Nuten, in einem Querschnitt senkrecht zur Drehachse bzw. Längsachse der elektrischen Maschine gesehen, ist frei von Stufen oder Aussparungen bzw. Vorsprüngen. Hierdurch wird erreicht, dass die Ableitung der aufgebrachten Druckkräfte vollständig oder im wesentlichen vollständig über die Füllstücke auf die Maschinenkomponente erfolgt, wobei in der Regel sämtliche Füllstücke, welche zwischen dem Angriffspunkt der Druckkraft und einem radial äußeren oder inneren Ende der Nut liegen, an der Druckableitung beteiligt sind.

Gemäß einer vorteilhaften Ausgestaltung sind die Nutwände eben, insbesondere komplanar zueinander, ausgebildet, und die Füllstücke liegen formschlüssig an den Nutwänden an. Dadurch kann ein aufwendiges Durchziehen der Kabel durch die Nuten vermieden werden, die Kabel können vielmehr abwechselnd mit den Füllstücken oder auch zusammen mit den Füllstücken radial von außen oder von innen, je nachdem, ob die Nuten auf dem Außenumfang oder dem Innenumfang der Maschinenkomponente bzw. des Stators münden, in die Nuten eingesetzt werden. In der Regel ist der Stator eines Generators mit innenliegendem Läufer mit Nuten versehen, deren Nutgrund radial außen angeordnet ist und welche auf der radialen Innenseite des Stators münden. Umgekehrt, wenn der Stator einem Läufer zugeordnet ist, der als Außenläufer ausgeführt ist, beispielsweise bei einem Generator mit Außenläufer, münden die Nuten in der Regel radial auf der Außenseite, so dass sich der Nutgrund radial innen befindet. Die Erfindung betrifft jegliche Ausführung einer Maschinenkomponente, insbesondere einen Stator, d. h. sowohl beispielsweise den Stator eines Generators mit Außenläufer als auch den Stator eines Generators mit Innenläufer.

Gemäß einer vorzuziehenden Ausführung der Erfindung ist eine Vielzahl von Kabeln radial nebeneinander in jeweils einer einzelnen Nut angeordnet. Zugleich sind in ein und derselben Nut nicht mehrere Kabel nebeneinander in Umfangsrichtung angeordnet. Dabei kann jeweils radial von innen nach außen abwechselnd ein Füllstück und ein Kabel derart in der Nut eingebracht sein, dass jeweils ein Kabel von genau zwei Füllstücken in einem Querschnitt betrachtet umschlossen wird. Zugleich wird vorteilhaft ein Füllstück in radialer Richtung der Komponente von zwei radial nebeneinander angeordneten Kabeln eingeschlossen. Diese Konfiguration wird nachfolgend noch mit Bezug auf die beigefügten Zeichnungen näher erläutert.

Alle Füllstücke sind beispielsweise aus einem schwach leitenden, mit Glasfasern verstärktem Kunststoff ausgebildet. In einer kostengünstigen Ausführung ist jedoch jedes zweite Füllstück in radialer Richtung gesehen aus einem nichtleitenden Werkstoff ausgeführt und die dazwischen liegenden Füllstücke aus einem schwach leitenden Werkstoff ausgebildet. Somit steht jedes Kabel mit einem schwach leitenden Füllstück in Kontakt.

Gemäß einer besonderen Ausführung der Erfindung sind die durch die Füllstücke eingeschlossenen Kabel Hochspannungskabel, welche beispielsweise für einen Spannungsbereich von mehr als 10 kV, insbesondere für einen Bereich von 20 bis 800 kV oder mehr ausgelegt sind. Die Kabel können einen Durchmesser von beispielsweise 20 bis 200 mm aufweisen und insbesondere einen leitenden Querschnitt im Bereich von 80 bis 3000 mm².

In einer Ausführung ist die erfindungsgemäße Komponente der Ständer eines Kraftwerkgenerators beispielsweise für ein Wasserkraftwerk. In einem anderen Anwendungsfall ist die Maschinenkomponente der Stator eines elektrischen Motors, beispielsweise einen Pumpenantriebsmotors.

Schließlich umfasst die Erfindung ein Verfahren zur Montage einer erfindungsgemäßen Maschinenkomponente. Gemäß des Verfahrens wird die gesamte Nutfüllung, das heißt die Kabel, insbesondere Hochspannungskabel, die Füllstücke und gegebenenfalls weitere Abstandsstücke, außerhalb der Komponente zusammengesetzt und insbesondere verklebt. Anschließend wird die zusammengesetzte Nutfüllung in die Nuten der Komponente eingebracht und gesichert. Insbesondere kann die Sicherung bei Aufbringen einer Vorspannung durch Verkeilen erfolgen.

Die Erfindung wird nachfolgend anhand eines Ausführungsbeispiels und den beigefügten Figuren erläutert.

Es zeigen:
- Figur 1: eine mit Kabeln und Füllstücken aufgefüllte Nut einer erfindungsgemäßen Maschinenkomponente;
- Figur 2: den radialen Endbereich einer Nut mit einem Druckelement zum Aufbringen einer Vorspannung.

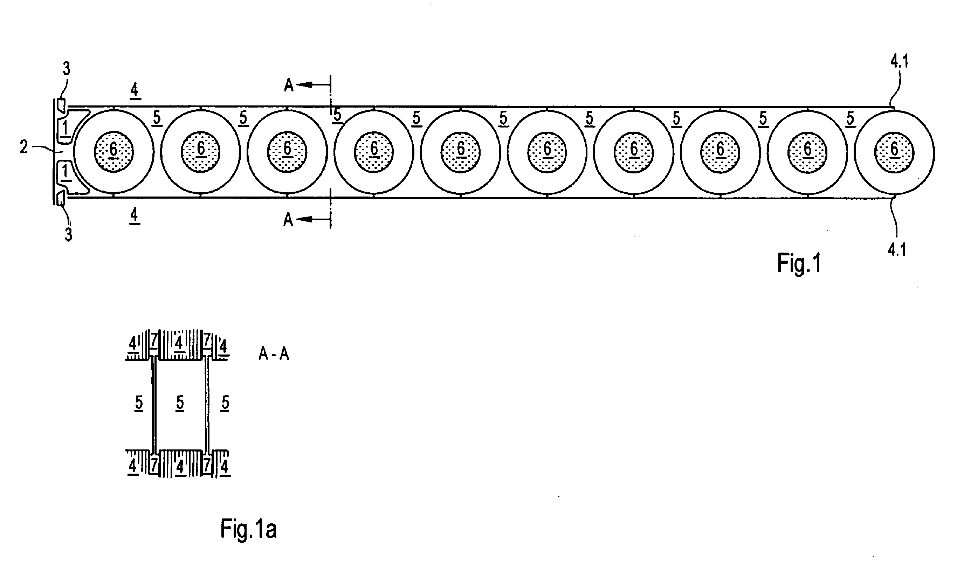

In der Figur 1 ist die Nut zwischen zwei Ständerzähnen 4 abwechselnd radial von innen nach außen bzw. von außen nach innen mit jeweils einem Füllstück und einem Kabel 6 gefüllt. Die Füllstücke sind generell mit dem Bezugszeichen 5 versehen, lediglich das radial äußerste Füllstück, bei einer radial außen mündenden Nut, bzw. das radial innerste Füllstück bei einer radial innen mündenden Nut, im Bereich der Nutöffnung ist mit dem Bezugszeichen 2 versehen. Auf dieses wird später noch gesondert eingegangen.

Die Kabel 6 verlaufen, wie bekannt, in axialer Richtung des Ständers in entsprechenden achsparallelen Nuten.

Die Füllstücke 5 sind aus einem schwach leitenden, mit Glasfasern verstärktem Kunststoff ausgebildet. Damit jedes Kabel 6 mit einem schwach leitenden Füllstück in Kontakt steht, sollte zumindest in radialer Richtung jedes zweite Füllstück 5 aus schwach leitendem Material ausgebildet sein.

Der Nutgrund (ganz rechts in der Figur 1 dargestellt) und die kabelumschließenden Oberflächen der Füllstücke sind derart rund ausgebildet, dass die Kabel formschlüssig an den Füllstücken beziehungsweise am Nutgrund anliegen. Die Anzahl der Kabel 6 sowie die Abmessungen der einzelnen Kabel und Füllstücke sind auf den einzelnen Anwendungsbereich angepasst.

Das radial äußerste Kabel 6 (oder bei einer radial innen mündenden Nut das radial innerste Kabel) werden von dem vorletzten Füllstück 5 und dem letzten (in radialer Richtung gesehen) Füllstück 2 umschlossen. Das Füllstück 2 im Bereich der Nutöffnung (ganz links in der Figur 1) weist, da es - wie man sieht - lediglich ein Kabel teilweise einschließt, eine abweichende Form gegenüber den Füllstücken 5 auf. Zudem sind in dieses Füllstück 2 an der Nutöffnung Magnetkerne 1 aus Paketen von verlustarmen Blech oder aus gesintertem Material eingelassen. Das Füllstück 2 ist aus nicht leitendem, mit Glasfasern verstärkten Kunststoff geformt. Die Magnetkerne 1 werden allseitig von Kunststoff umschlossen. Der Abstand zwischen den beiden Magnetkernen 1 wird beim Entwurf der Maschine festgelegt, damit vorbestimmte Eigenschaften des Generators oder des Motors eingehalten werden.

Das Füllstück 2 wird unmittelbar durch die beiden in Längsrichtung des Ständers verlaufenden Keile 3 ortsfest gehalten. Durch Einführen der Keile 3 kann ein Druck in radialer Richtung der Maschine auf die Füllstücke 2 und 5 eingestellt werden, ohne dass dieser Druck - aufgrund der erfindungsgemäßen Ausbildung der Füllstücke 2 und 5 - auf die Kabel 6 übertragen wird.

Das Füllstück 2 und die Füllstücke 5 weisen Vorsprünge auf, welche derart in Nuten in der Maschinenkomponente beziehungsweise in dem Ständer der elektrischen Maschine eingreifen, dass die Füllstücke gegen axiales Verschieben gesichert sind. Dies ist im Detail nochmals in der Figur 1 a dargestellt. Diese zeigt eine geschnittene Darstellung in Richtung der Pfeile A - A der Figur 1. Wie man sieht, sind in axialer Richtung der Maschinenkomponente eine Vielzahl von Füllstücken 5 hintereinander, benachbart zueinander angeordnet. Die Füllstücke 5 weisen jeweils an ihren axialen Enden Vorsprünge in Umfangsrichtung der Maschinenkomponente auf, welche in Nuten beziehungsweise in radialer Richtung der Maschine verlaufende Schlitze 7 eingreifen. Diese Schlitze können beispielsweise Luftschlitze eines Ständerblechpaketes sein. Durch Eingreifen der Vorsprünge der Füllstücke 5 in die Nuten 7 sind die Füllstücke 5 gegen axiales Verrutschen gesichert. Entsprechendes gilt, auch wenn es nicht im einzelnen dargestellt ist, für die Füllstücke 2 und für hier nicht dargestellte Füllstücke 8, auf die später noch eingegangen wird, die mit entsprechenden Vorsprüngen versehen sind, welche in Nuten der Maschinenkomponente eingreifen.

Abweichend von der Darstellung in der Figur 1 kann in jedem radial äußersten bzw. innersten Füllstück 2, je nachdem, ob die Nut außen oder innen mündet, anstelle von zwei Magnetkernen nur an einem axialen Ende der Füllstücke 2 beziehungsweise 5 ein Vorsprung vorgesehen sein, welcher in entsprechende Nuten oder Schlitze 7 der Maschinenkomponente eingreift. Durch zumindest mittelbarem Aneinanderanliegen der Füllstücke 5 beziehungsweise 2 (oder 8) kann somit gleichfalls eine axiale Verschiebung aller Füllstücke 5 und 2 verhindert werden. Auch die Ausbildung von Vorsprüngen auf nur einer Seite der Nutwände ist möglich.

Abweichend von der Darstellung in der Figur 1 kann in jedem radial äußersten oder innersten Füllstück 2 anstelle von zwei Magnetkernen 1 ein einzelner Magnetkern 1 angeordnet sein, der sich vorteilhaft in Umfangsrichtung nahezu über die gesamte Nutbreite erstreckt.

Das erste Füllstück am Nutgrund, d. h. das in der Nut innerste Füllstück 5, kann vorteilhaft auf einem Absatz im Zahn 4 beziehungsweise in der Nutwand aufliegen. Ein solcher Absatz ist mit dem Bezugszeichen 4.1 versehen. Durch diesen Absatz 4.1 und die Form der Füllstücke 5 beziehungsweise 2 wird gewährleistet, dass beim Einführen der Keile 3 ein Druck in radialer Richtung der Maschinenkomponente auf die Füllstücke 2 und 5 eingestellt werden kann, ohne dass dieser auf die Kabel 6 übertragen wird.

Die Kabel 6 können bei der Montage beispielsweise mit einem schwach leitenden Kleber mit den Füllstücken 2 und 5 verklebt werden. Diese Verklebung überträgt dann alle Kräfte, die auf die Kabel 6 einwirken auf die Füllstücke 2 und 5 und von diesen auf die Maschinenkomponente.

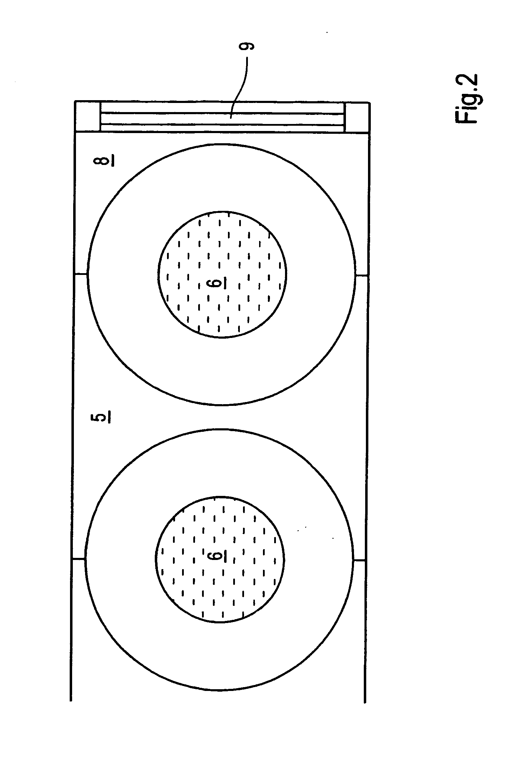

Um die Füllstücke mit einer zusätzlichen Vorspannung in radialer Richtung in der Nut zu verspannen, kann - wie in der Figur 2 dargestellt ist - im Bereich des Nutgrunds zwischen Nutgrund und innerstem Füllstück 5 in der Nut, welches entweder das radial äußerste Füllstück ist, bei radial innen mündender Nut, bzw. das radial innerste Füllstück ist, bei radial außen mündender Nut, ein Druckelement 9 vorgesehen sein, welches einen radialen Druck radial in Richtung der Mündung der Nut auf das Füllstück 5 ausübt. In der Ausführung gemäß der Figur 2 ist zusätzlich zwischen dem innersten Füllstück 5 in der Nut und dem Nutgrund ein zusätzliches Füllstück 8 vorgesehen, welches die in der Nut innenliegende Oberfläche, d. h. die Oberfläche, welche dem Nutgrund zugewandt ist, des in der Nut innersten Kabels 6 umschließt, sich radial gegen das in der Nut innerste Füllstück 5 abstützt und zugleich unmittelbar von dem Druckelement 9, beispielsweise einer Wellfeder, druckbeaufschlagt wird.

Als Werkstoff für die Keile 3 kommt beispielsweise ein Epoxy-Glasfaser-Werkstoff in Betracht. Auch für die verschiedenen Füllstücke 5 und 2 haben sich Epoxy-Verbundwerkstoffe als geeignet erwiesen.

## Patentansprüche

1. Maschinenkomponente einer elektrischen Maschine umfassend einen Stator mit einem Ständerblechpaket mit Ständerzähnen (4), mit einer Vielzahl von zwischen den Ständerzähnen (4) radial und achsparallel verlaufenden Nuten, in welchen eine elektrische Wicklung mit einer Vielzahl von in axialer Richtung des Stators verlaufenden Kabeln (6) angeordnet ist,
wobei die Nuten einen Nutgrund und zwei gegenüberstehend angeordnete Nutwände aufweisen, zwischen welchen eine Vielzahl von Füllstücken (2, 5, 8) eingebracht ist, weiterhin umfassend folgende Merkmale:
jeweils mindestens zwei Füllstücke (2, 5, 8) umschließen den Umfang eines Kabels (6) vollständig und formschlüssig;
die Füllstücke (2, 5, 8) stützen sich in radialer Richtung der Maschinenkomponente derart aufeinander und das innerste Füllstück (5, 8) in der Nut derart auf dem Nutgrund oder im Bereich des Nutgrunds ab, dass von außen oder durch die Kabel aufgebrachte Druckkräfte über die Füllstücke (2, 5, 8) auf die Maschinenkomponente abgeleitet werden, wobei die Nutwände, welche die Füllstücke zwischen sich einschließen, zumindest im Bereich der Füllstücke in radialer Richtung stetig ausgebildet sind;
die Füllstücke (2, 5, 8) weisen Vorsprünge auf, welche in Nuten, insbesondere in radial verlaufende Schlitze (7), der Maschinenkomponente derart eingreifen, dass die Füllstücke (2, 5, 8) gegen eine Verschiebung in axialer Richtung der Maschinenkomponente gesichert sind.

2. Maschinenkomponente gemäß Anspruch 1, **dadurch gekennzeichnet, dass** die Nutwände eben ausgebildet sind und die Füllstücke (2, 5, 8) formschlüssig an den Nutwänden anliegen.

3. Maschinenkomponente gemäß Anspruch 2, **dadurch gekennzeichnet, dass** die sich gegenüberstehenden Nutwände komplanar zueinander sind.

4. Maschinenkomponente gemäß einem der Ansprüche 1 bis 3, **dadurch gekennzeichnet, dass** in Umfangsrichtung der Maschinenkomponente jeweils ein einziges Füllstück (2, 5, 8) zwischen den sich gegenüberstehend angeordneten Nutwänden eingebracht ist und in Radialrichtung der Maschinenkomponente eine Vielzahl von Füllstücken (2, 5, 8) derart jeweils in einer Nut aufeinandergestapelt sind, dass jeweils jedes Kabel (6) im Querschnitt gesehen von genau zwei Füllstücken (2, 5, 8) vollständig umschlossen wird.

5. Maschinenkomponente gemäß einem der Ansprüche 1 bis 4, **dadurch gekennzeichnet, dass** in radialer Richtung der Maschinenkomponente in jeder Nut jeweils mindestens jedes zweite Füllstück (2, 5, 8) aus einem schwach leitenden, insbesondere mit Glasfasern verstärkten, Kunststoff ausgebildet ist.

6. Maschinenkomponente gemäß einem der Ansprüche 1 bis 5, **dadurch gekennzeichnet, dass** die jeweils äußersten Füllstücke (2) in der Nut einen oder mehrere Magnetkerne (1) aus Paketen von verlustarmen Blechen umfassen, welche insbesondere im Füllstück (2) vollständig eingeschlossen sind, wobei diese Füllstücke (2) insbesondere aus einem nichtleitenden, vorteilhaft glasfaserverstärkten, Kunststoff ausgebildet sind.

7. Maschinenkomponente gemäß einem der Ansprüche 1 bis 5, **dadurch gekennzeichnet, dass** die jeweils äußersten Füllstücke (2) in der Nut einen oder mehrere Magnetkerne (1) aus gesintertem Material umfassen, welche insbesondere im Füllstück (2) vollständig eingeschlossen sind, wobei diese Füllstücke (2) insbesondere aus einem nichtleitenden, vorteilhaft glasfaserverstärkten, Kunststoff ausgebildet sind.

8. Maschinenkomponente gemäß einem der Ansprüche 1 bis 7, **dadurch gekennzeichnet, dass** die in der Nut äußersten Füllstücke (2) im Bereich der Nutöffnung, insbesondere durch zwei Keile (3) im Bereich des in der Nut äußeren Endes der sich gegenüberstehend angeordneten Nutwände, verkeilt sind.

9. Maschinenkomponente gemäß einem der Ansprüche 1 bis 8, **dadurch gekennzeichnet, dass** die Kabel (6) mit den Füllstücken (2, 5, 8) verklebt sind.

10. Maschinenkomponente gemäß einem der Ansprüche 1 bis 9, **dadurch gekennzeichnet, dass** die Füllstücke (2, 5, 8) gegeneinander verspannt sind.

11. Maschinenkomponente gemäß Anspruch 10, **dadurch gekennzeichnet, dass** die Verspannung durch ein elastisches Druckelement (9), insbesondere eine Druckfeder oder Wellfeder, welche(s) in jeder Nut zwischen dem innersten Füllstück (5) in der Nut und dem Nutgrund eingebracht ist, erzeugt wird.

12. Maschinenkomponente gemäß einem der Ansprüche 1 bis 11, **dadurch gekennzeichnet, dass** die Kabel (6) Hochspannungskabel sind, insbesondere mit einem Durchmesser von 20 bis 200 mm und insbesondere mit einem leitenden Querschnitt im Bereich von 80 bis 3000 mm².

13. Maschinenkomponente gemäß Anspruch 12, **dadurch gekennzeichnet, dass** die Kabel eine Spannung von mehr als 10 kV, insbesondere von 20 bis 800 kV oder mehr führen.

14. Maschinenkomponente gemäß einem der Ansprüche 1 bis 13, **dadurch gekennzeichnet, dass** die Maschinenkomponente der Ständer eines Kraftwerkgenerators ist.

15. Maschinenkomponente gemäß einem der Ansprüche 1 bis 13, **dadurch gekennzeichnet, dass** die Maschinenkomponente der Stator eines elektrischen Motors ist.

16. Verfahren zur Montage einer Maschinenkomponente einer elektrischen Maschine, umfassend einen Stator mit einem Ständerblechpaket mit Ständerzähnen (4), mit einer Vielzahl von zwischen den Ständerzähnen (4) radial und achsparallel verlaufenden Nuten, in welchen eine elektrische Wicklung mit einer Vielzahl von in axialer Richtung des Stators verlaufenden Kabeln (6) angeordnet wird, wobei die Nuten einen Nutgrund und zwei gegenüberstehend angeordnete Nutwände aufweisen, zwischen welchen eine Vielzahl von Füllstücken eingebracht wird, mit den folgenden weiteren Verfahrensschritten:
aus den Kabeln (6) und einer Vielzahl von Füllstücken (2, 5, 8) wird eine Nutfüllung außerhalb der Nut zusammengesetzt und insbesondere verklebt,
wobei die Füllstücke (2, 5, 8) so ausgeformt sind, dass jeweils zwei Füllstücke (2, 5, 8) den Umfang eines Kabels (6) vollständig und formschlüssig umschließen
die zusammengesetzte Nutfüllung wird in eine Nut eingeführt, deren Nutwände, welche die Füllstücke zwischen sich einschließen, zumindest im Bereich der Füllstücke in radialer Richtung der Maschinenkomponente stetig ausgebildet sind, und in der Nut befestigt, insbesondere verkeilt, so dass die wechselseitige Abstützung der Füllstücke (2, 5, 8) in radialer Richtung der Maschinenkomponente erfolgt und sich das innerste Füllstück (5, 8) in der Nut auf dem Nutgrund oder im Bereich des Nutgrunds abstützt, wobei von außen oder durch die Kabel aufgebrachte Druckkräfte über die Füllstücke (2, 5, 8) auf die Maschinenkomponente abgeleitet werden und wobei die Füllstücke derart gefertigt sind, dass sie Vorsprünge aufweisen, welche nach dem
Einsetzen der Füllstücke in Nuten, insbesondere in radial verlaufende Schlitze, des Stators derart eingreifen, dass die Füllstücke gegen eine Verschiebung in axialer Richtung der Maschinenkomponente gesichert werden.

## Claims

1. A machine component of an electric machine, comprising a stator with a stator core with stator teeth (4), a plurality of grooves extending radially and in an axially parallel manner between the stator teeth (4), in which an electric winding is arranged with a plurality of cables (6) extending in the axial direction of the stator, with the grooves having a groove base and two groove walls arranged opposite of one another, between which a plurality of filling elements (2, 5, 8) are introduced, and further comprising the following features:
at least two filling elements (2, 5, 8) each enclose the circumference of a cable (6) completely and in an interlocking manner;
the filling elements (2, 5, 8) supporting each other in the radial direction of the machine component and the innermost filling element (5, 8) resting in the groove on the groove base or in the region of the groove base in such a way that pressure forces applied from the outside or through the cables are diverted via the filling elements (2, 5, 8) onto the machine component, with the groove walls which enclose the filling elements between themselves being arranged in a constant manner in the radial direction;
the filling elements (2, 5, 8) having projections which engage in grooves, especially radially extending slits (7), of the machine component in such a way that the filling elements (2, 5, 8) are protected against displacement in the axial direction of the machine component.

2. A machine component according to claim 1, **characterized in that** the groove walls are arranged to be planar and the filling elements (2, 5, 8) rest in an interlocking manner on the groove walls.

3. A machine component according to claim 2, **characterized in that** the mutually opposite groove walls are coplanar with respect to each other.

4. A machine component according to one of the claims 1 to 3, **characterized in that** one single filling element (2, 5, 8) each is introduced in the circumferential direction of the machine component between the groove walls arranged opposite of each other, and a plurality of filling elements (2, 5, 8) are each stacked upon one another in a groove in the radial direction of the machine component in such a way that each cable (6), when seen in the cross section, is completely enclosed by precisely two filling elements (2 5 8)

5. A machine component according to one of the claims 1 to 4, **characterized in that** in the radial direction of the machine component in each groove at least every other filling element (2, 5, 8) each is made of a low-conduction plastic which is especially reinforced with glass fibres.

6. A machine component according to one of the claims 1 to 5, **characterized in that** the respectively outermost filling elements (2) in the groove comprise one or several magnet cores (1) made of stacks of low-loss plates which are especially completely enclosed in the filling element (2), with said filling elements (2) being especially made of a non-conductive plastic which is advantageously reinforced with glass fibres.

7. A machine component according to one of the claims 1 to 5, **characterized in that** the respectively outermost filling elements (2) in the groove comprise one or several magnet cores (1) which are made of a sintered material and are especially completely enclosed in the filling element (2), with said filling elements (2) being especially made of a non-conductive plastic which is advantageously reinforced with glass fibres.

8. A machine component according to one of the claims 1 to 7, **characterized in that** the filling elements (2) which are outermost in the groove are wedged in the region of the groove opening, especially by two wedges (3) in the region of the outer end in the groove of the groove walls which are arranged opposite of each other.

9. A machine component according to one of the claims 1 to 8, **characterized in that** the cables (6) are glued together with the filling elements (2, 5, 8).

10. A machine component according to one of the claims 1 to 9, **characterized in that** the filling elements (2, 5, 8) are braced against each other.

11. A machine component according to claim 10, **characterized in that** the bracing is produced by an elastic pressure element (9), especially a pressure spring or an ondular washer, which is introduced in each groove between the innermost filling element (5) in the groove and the groove base.

12. A machine component according to one of the claims 1 to 11, **characterized in that** the cables (6) are high voltage cables, especially with a diameter of 20 to 200 mm and especially with a conductive cross section in the region of 80 to 3000 mm².

13. A machine component according to claim 12, **characterized in that** the cables transmit a voltage of more than 10 kV, especially 20 to 800 kV or more.

14. A machine component according to one of the claims 1 to 13, **characterized in that** the machine component is the stator of a power plant generator.

15. A machine component according to one of the claims 1 to 13, **characterized in that** the machine component is the stator of an electric motor.

16. A method for mounting a machine component of an electric machine, comprising a stator with a stator core with stator teeth (4), a plurality of grooves extending between the stator teeth (4) in a radial and axially parallel manner, in which an electric winding is arranged with a plurality of cables (6) extending in the axial direction of the stator, with the grooves having a groove base and two groove walls arranged opposite of one another, between which a plurality of filling elements are introduced, and further comprising the following method steps:
a groove filling is assembled outside of the groove from the cables (6) and a plurality of a filling elements (2, 5, 8) and is especially glued together, with the groove elements (2, 5, 8) being formed in such a way that two filling elements (2, 5, 8) each enclose the circumference of a cable (6) completely and in an interlocking manner,
the assembled groove filling is introduced into a groove, with the groove walls of the same, which enclose the filling elements between themselves, being arranged to be constant at least in the region of the filling elements in the radial direction of the machine component, and is fastened in the groove, and especially wedged therein, so that the mutual support of the filling elements (2, 5, 8) occurs in the radial direction of the machine component and the innermost filling element (5, 8) rests in the groove on the groove base or in the region of the groove base, with pressure forces applied from the outside or through the cables being diverted via the filling elements (2, 5, 8) onto the machine component and the filling elements being made in such a way that they comprise projections which after the insertion of the filling elements into the grooves engage in grooves, especially in radially extending slits, of the stator in such a way that the filling elements are secured against displacement in the axial direction of the machine component.

## Revendications

1. Composant d'une machine électrique comprenant un stator avec un paquet de tôles de stator avec des dents de stator (4), avec une pluralité de gorges orientées dans le sens radial et parallèles à l'axe entre les dents du stator (4), dans lesquelles est disposé un enroulement électrique avec une pluralité de câbles (6) orientés dans le sens axial du stator, dans lequel les gorges présentent un fond de gorge et deux parois de gorge se faisant face, entre lesquelles est introduite une pluralité d'éléments de remplissage (2, 5, 8), présentant en outre les caractéristiques suivantes :
au moins deux éléments de remplissage (2, 5, 8) entourent complètement et en correspondance de forme la circonférence de chaque câble (6) ;
les éléments de remplissage (2, 5, 8) s'appuient dans le sens radial du composant de machine les uns sur les autres et l'élément de remplissage le plus intérieur (5, 8) s'appuie dans la gorge sur le fond de la gorge ou dans la région du fond de la gorge de telle manière que les forces de compression exercées de l'extérieur ou par le câble soient évacués par les éléments de remplissage (2, 5, 8) vers le composant de machine, les parois de la gorge qui renferment entre elles les éléments de remplissage étant conformées de façon continue dans le sens radial, au moins au niveau des éléments de remplissage ;
les éléments de remplissage (2, 5, 8) présentent des saillies qui se mettent en prise dans des gorges, en particulier dans des fentes radiales (7), du composant de machine, de telle manière que les éléments de remplissage (2, 5, 8) soient fixés de façon à empêcher leur translation dans le sens axial du composant de machine.

2. Composant de machine selon la revendication 1, **caractérisé en ce que** les parois de la gorge sont planes et les éléments de remplissage (2, 5, 8) reposent en correspondance de forme sur les parois de la gorge.

3. Composant de machine selon la revendication 2, **caractérisé en ce que** les parois de la gorge se faisant face sont coplanaires l'une de l'autre.

4. Composant de machine selon l'une des revendications 1 à 3, **caractérisé en ce que** dans le sens de la circonférence du composant de machine, un seul élément de remplissage (2, 5, 8) est introduit entre deux parois de gorge se faisant face et dans le sens radial du composant de machine, une pluralité d'éléments de remplissage (2, 5, 8) est empilée dans chaque gorge de telle manière que chaque câble (6), vu en coupe transversale, soit entièrement entouré par deux éléments de remplissage (2, 5, 8) exactement.

5. Composant de machine selon l'une des revendications 1 à 4, **caractérisé en ce que** dans le sens radial du composant de machine au moins un élément de remplissage (2, 5, 8) sur deux dans chaque gorge est fait d'une matière plastique faiblement conductrice, en particulier armée de fibres de verre.

6. Composant de machine selon l'une des revendications 1 à 5, **caractérisé en ce que** les éléments de remplissage (2) les plus extérieurs dans chaque gorge entourent un ou plusieurs noyaux magnétiques (1) faits de paquets de tôles à faibles pertes, qui sont en particulier complètement inclus dans l'élément de remplissage (2), ces éléments de remplissage (2) étant en particulier composés d'une matière plastique non conductrice, avantageusement armée de fibres de verre.

7. Composant de machine selon l'une des revendications 1 à 5, **caractérisé en ce que** les éléments de remplissage (2) les plus extérieurs dans chaque gorge entourent un ou plusieurs noyaux magnétiques (1) faits de matériau fritté, qui sont en particulier complètement inclus dans l'élément de remplissage (2), ces éléments de remplissage (2) étant en particulier composés d'une matière plastique non conductrice, avantageusement armée de fibres de verre.

8. Composant de machine selon l'une des revendications 1 à 7, **caractérisé en ce que** les éléments de remplissage (2) les plus extérieurs dans chaque gorge sont calés au niveau de l'ouverture de la gorge, en particulier par deux coins (3) au niveau de l'extrémité extérieure dans la gorge des parois de la gorge qui se font face.

9. Composant de machine selon l'une des revendications 1 à 8, **caractérisé en ce que** les câbles (6) sont collés aux éléments de remplissage (2, 5, 8).

10. Composant de machine selon l'une des revendications 1 à 9, **caractérisé en ce que** les éléments de remplissage (2, 5, 8) sont serrés les uns contre les autres.

11. Composant de machine selon la revendication 10, **caractérisé en ce que** le serrage est produit par un élément de compression élastique (9), en particulier un ressort de compression ou un ressort ondulé, qui est inséré dans chaque gorge entre l'élément de remplissage le plus intérieur (5) dans la gorge et le fond de la gorge.

12. Composant de machine selon l'une des revendications 1 à 11, **caractérisé en ce que** les câbles (6) sont des câbles à haute tension, en particulier d'un diamètre de 20 à 200 mm et ayant en particulier une section conductrice comprise entre 80 et 3000 mm².

13. Composant de machine selon la revendication 12, **caractérisé en ce que** les câbles acheminent une tension de plus de 10 kV, en particulier de 20 à 800 kV ou plus.

14. Composant de machine selon l'une des revendications 1 à 13, **caractérisé en ce que** le composant de machine est le stator d'un générateur de centrale électrique.

15. Composant de machine selon l'une des revendications 1 à 13, **caractérisé en ce que** le composant de machine est le stator d'un moteur électrique.

16. Procédé pour le montage d'un composant d'une machine électrique comprenant un stator avec un paquet de tôles de stator avec des dents de stator (4), avec une pluralité de gorges orientées dans le sens radial et parallèles à l'axe entre les dents du stator (4), dans lesquelles est disposé un enroulement électrique avec une pluralité de câbles (6) orientés dans le sens axial du stator, dans lequel les gorges présentent un fond de gorge et deux parois de gorge se faisant face, entre lesquelles est introduite une pluralité d'éléments de remplissage,
présentant les autres étapes de procédé suivantes :
un remplissage des gorges est composé avec les câbles (6) et une pluralité d'éléments de remplissage (2, 5, 8) à l'extérieur de la gorge et en particulier collé, les éléments de remplissage (2, 5, 8) étant conformés de telle manière que deux éléments de remplissage (2, 5, 8) entourent complètement et en correspondance de forme la circonférence de chaque câble (6) ;
le remplissage de gorge composé est introduit dans une gorge, dont les parois de gorge renfermant les éléments de remplissage ont une forme constante dans le sens radial du composant de machine au moins au niveau des éléments de remplissage, et fixé dans la gorge, en particulier calé, de telle manière que l'appui réciproque des éléments de remplissage (2, 5, 8) s'effectue dans le sens radial du composant de machine et que l'élément de remplissage le plus intérieur (5, 8) s'appuie dans la gorge sur le fond de la gorge ou au niveau du fond de la gorge, les forces exercées de l'extérieur ou par les câbles étant évacuées par les éléments de remplissage (2, 5, 8) vers le composant de machine et les éléments de remplissage étant fabriqués de telle façon qu'ils présentent des saillies qui se mettent en prise, lors de l'insertion des éléments de remplissage, dans des gorges et en particulier dans des fentes radiales, du stator, de telle manière que les éléments de remplissage sont fixés de façon à empêcher leur translation dans le sens axial du composant de machine.
